# EUROPEAN PATENT APPLICATION

(11) **EP 1 253 508 A2**
(43) Date of publication of application: **30.10.2002**
(21) Application number: 02008962.9
(22) Date of filing: 22.04.2002
(51) Int. Cl.: G06F 1/26

(54) **Peripheral device**

(30) Priority: 24.04.2001 JP 2001126632
(71) Applicant: TEAC CORPORATION, Musashino-shi, Tokyo 180-8550 (JP)
(72) Inventor: Ihara, Keizo, Hachioji-shi, Tokyo (JP)
(74) Representative: Schorr, Frank, Dr.

(57) **Abstract**

A peripheral device reliably reports errors to a main device. When a control signal is received from the main device, an interface circuit requests a voltage detecting circuit to determine whether or not a main circuit section is operative. The voltage detecting circuit determines the capability of operation of the main circuit section based on the state of charge of a charging/discharging section, and outputs the results to the interface circuit. If determined to be operative, the interface circuit turns on a power supply switch to operate the main circuit section, while outputting the control signal received from the main device to the main circuit section. If inoperative, the interface circuit transmits to the main device a signal informing it of the inoperative state.

## Description

### BACKGROUND OF THE INVENTION

### 1. Field of the Invention

The present invention relates to a peripheral device which is connected to a main device, such as a personal computer.

### 2. Description of the Related Art

Most personal computers have interfaces for connecting various types of peripheral devices. USB (Universal Serial Bus), which permits relatively high speed serial communication and IEEE1394 are examples of interface systems used for the connection of peripheral devices. Parallel communication ports based on the Centronics standard and PCI buses are other interfaces for connecting peripheral devices.

Some interfaces include a power feed line for supplying a predetermined, relatively small amount of electric power to a peripheral device connected to the interface. With a USB interface, for example, it is possible to supply up to 5V-500mA of electric power to each peripheral device. An external PC card reader unit, which is one type of peripheral device, receives electric power through the power feeding line of a printer interface via a printer cable.

A disadvantage of this power supply method is that it cannot supply sufficient power as necessary for those peripheral devices which consume a relatively large amount of power. If it is desired to activate a particular type of peripheral device, such as a flow/pressure sensor incorporating a sensor amplifier, which requires a relatively large electric current during detection in response to an instruction from a personal computer but consumes no power at other times, a storage battery may be provided in the peripheral device. Normally, the storage battery is charged with electric current supplied through the power feeding line of the interface, and supplies electric power during detection.

However, when it is desired to start the peripheral device in response to a detection instruction from the personal computer when the storage battery within the peripheral device is not sufficiently charged, start-up may fail. Furthermore, in such a case, no error is reported to the personal computer. Thus, there is a problem that the personal computer is unable to properly control the peripheral device.

### SUMMARY OF THE INVENTION

It is an object of the present invention to provide a peripheral device which can easily and properly be controlled by a main device, such as a personal computer.

A peripheral device according to the present invention includes a charging/discharging means for accumulating electric power received via a power feed line of an interface connected to the main device, a detecting means for detecting the state of charge of the charging/discharging means, and an interface controlling means for transmitting a signal indicative of an inoperative state to the main device via the interface when the value of the detected state of charge is below a reference value.

Alternatively, a peripheral device according to the present invention includes a main circuit section, a charging/discharging means for accumulating electric power received via a power feedline of an interface connected to the main device and supplying the accumulated electric power to the main circuit section, a detecting means for detecting the state of charge of the charging/discharging means, and an interface controlling means for determining whether or not the main circuit section is operative based on the state of charge and, when it is determined that the main circuit section is not operative, transmitting to the main device via the interface a signal indicative of an inoperative state .

The peripheral device according to the present invention detects the state of charge of the charging/discharging means and determines whether the detected charged state is sufficient for the operation of the main circuit section. If the charged state is insufficient for the operation of the main circuit section, the peripheral device transmits a signal indicative of inoperative state to the main device, such as a personal computer. The main device can receive the signal indicative of inoperative state from the peripheral device to properly recognize the state of the peripheral device.

In one aspect of the present invention, when a start-up instruction signal is sent from the main device to the peripheral device, the peripheral device determines, in response to the input of the start-up instruction signal, whether the state of charge at that time is sufficient for operating the main circuit section, and communicates the results of the determination to the main circuit section. If affirmative, the electric power accumulated in the charging/discharging means is supplied to the main circuit section. The main circuit section operates in accordance with a control signal from the main device. If, however, an inoperative state is determined, no power is supplied from the charging/discharging means.

In another aspect of the present invention, the peripheral device receives electric power from an external power source in addition to the power feed line of the interface. When the external power source supplies electric power, the main circuit section can operate independently of the charged state of the charging/discharging means, and the peripheral device does not transmit a signal indicative of inoperative state to the main device even if the charged state is low.

Any signals indicating abnormal operation of the peripheral device are included in the signal indicative of inoperative state according to the present invention. Examples of such signals are a not ready" signal and an "error message" signal. Various types of signals indicating inoperative state may exist according to the function of the peripheral device. For instance, if the peripheral device is an optical disk drive, such as a CD drive or a DVD drive, a signal indicating that no optical disk is present can serve as a signal indicating an inoperative state, irrespective of whether or not an optical disk is actually present .

The present invention will be more apparent with reference to the attached drawings and the following description of the preferred embodiment.

### BRIEF DESCRIPTION OF THE DRAWINGS

Fig. 1 is a block diagram showing the structure of a peripheral device;
Fig. 2A is a descriptive view illustrating how the peripheral device shown in Fig. 1 operates when the state of chargeis sufficient;
Fig. 2B is a descriptive view illustrating how the peripheral device shown in Fig. 1 operates when the state of chargeis insufficient;
Fig. 3 is a descriptive view illustrating how the peripheral device shown in Fig. 1 operates when an external power source is connected thereto; and
Fig. 4 is an alternative descriptive view illustrating how the peripheral device shown in Fig. 1 operates.

### DESCRIPTION OF THE PREFERRED EMBODIMENT

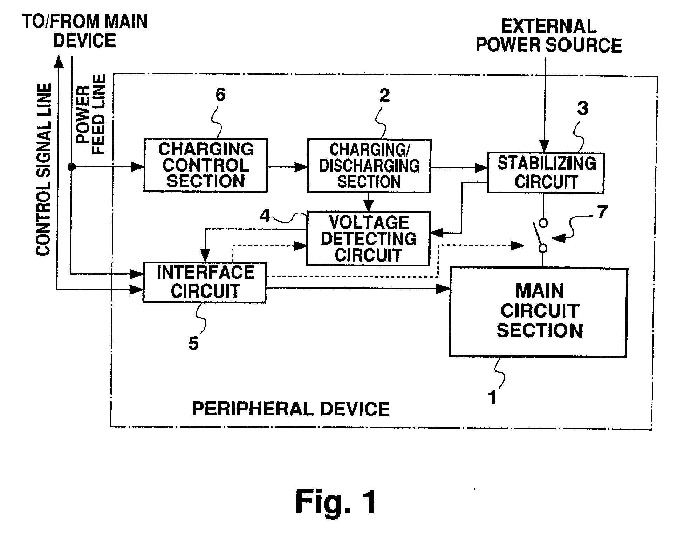

A preferred embodiment of the present invention will be described with reference to the attached drawings. A peripheral device according to the present invention is connected to a main device, such as a personal computer, via an interface, such as a USB, IEEE1394, or PCI interface. The peripheral device of the present invention may be a CD-R, a scanner, a measuring device, or the like. Fig. 1 is a block diagram illustrating mainly the interface section of the peripheral device according to one embodiment of the present invention. In this embodiment, the peripheral device includes a main circuit section 1, a charging/discharging section 2, a stabilizing circuit 3, a voltage detecting circuit 4, an interface circuit 5, a charging control section 6, and a power supply switch 7.

A power feed line and a control signal line come from the main device, such as a personal computer. The control signal line is connected to the interface circuit 5, while the power feed line is connected to both the interface circuit 5 and the charging control section 6.

The main circuit section 1 serves to implement a main function of the peripheral device and operates using electric power supplied from the stabilizing circuit 3 via the power supply switch 7. The charging/discharging section 2 may be, for example, a storage battery or a large capacity condenser. The charging control section 6 receives electric power from the main device through the power feeding line and charges the charging/discharging section 2. The stabilizing circuit 3 supplies electric power fed from the charging/discharging section 2 to the main circuit section via the power supply switch 7. The stabilizing circuit 3 stabilizes the output voltage of the charging/discharging section 2, so that a predetermined voltage value is applied to the main circuit section 1 serving as a load, regardless of how the main circuit section 1 operates. If an external power source is provided, the stabilizing circuit 3 receives electric power from the external power source and supplies power to the main circuit section 1 via the power supply switch 7.

When no external power source is connected to the stabilizing circuit 3, the voltage detecting circuit 4 determines whether the voltage value of the charging/discharging section 2 has reached a predetermined voltage value (i.e., whether the main circuit section 1 is operative), and outputs a signal indicative of the result of determination to the interface circuit 5. Also, the voltage detecting circuit 4 detects the presence or absence of the external power source connected to the stabilizing circuit 3 and, when the external power source is detected, outputs a signal indicating that the main circuit section 1 is operative to the interface circuit 5, regardless of the voltage value of the charging/discharging section 2.

The interface circuit 5 operates using electric power supplied through the power feed line. In principle, the interface circuit 5 serves to supply the main circuit section 1 with the control signal received from the main device via the control signal line. In this embodiment, the interface circuit 5 receives a signal indicating of whether or not the main circuit section 1 is operative from the voltage detecting circuit 4. In response to the signal, if the main circuit section 1 is operative, the interface circuit 5 turns on the power supply switch 7 to supply electric power to the main circuit section 1, while supplying the main circuit section 1 with the control signal received via the control signal line.

If it is determined that the main circuit section 1 is inoperative, the interface circuit 5 turns off the power supply switch 7 to stop feeding electric power to the main circuit section 1. At the same time, if the control signal is received from the main device via the control signal line the interface circuit 5 transmits a signal indicative of the inoperative state to the main device via the control signal line. Specifically, the signal indicates that the device is not ready. More specifically, the signal indicates that no recording medium is inserted, or that an impossible measurement result value or error information in accordance with a certain protocol predetermined for the main device has been detected.

According to this embodiment, even when a medium, such as a CD-R, is inserted in a CD-R drive, for example, a signal indicating that no medium is present is sent when the state of charge (e.g., an output voltage value) of the charging/discharging section 2 is insufficient to operate the main circuit section 1.

Alternatively, in a printer, for example, even when the printing sheets are already fed, error information indicating "no paper" may be sent. In a measuring device consisting of a strain gauge and a sensor amplifier, a measurement result value (an impossible measurement value) which exceeds a predetermined value is output in a driver software installed in the main device or the personal computer. In addition, when the error information is predefined in the driver software installed in the main device or the personal computer, so that the interface circuit 5 can send the error information according to the definition, it is possible for the main device to recognize whether or not the peripheral device is ready, regardless of the type of peripheral device. It should be noted that the voltage detecting circuit 4 may determine whether or not the main circuit section 1 is operative in response to a request from the interface circuit 5. In such a case, when the control signal is received from the main device, the interface circuit 5 requests the voltage detecting circuit 4 to determine whether or not the main circuit section 1 is operative, and then receives a signal indicative of the result of the determination.

Operation of the peripheral device of this embodiment will be described in detail below using two examples in which an external power source for the peripheral device is not connected. First, operation of the peripheral device when the external power scurce is not connected thereto will be described. At such times, the peripheral device of this embodiment only receives electric power from the main device, such as a personal computer, via the power feed line of the interface cable. Using the electric power supplied through the power feedline, the charging control section 6 charges the charging/discharging section 2.

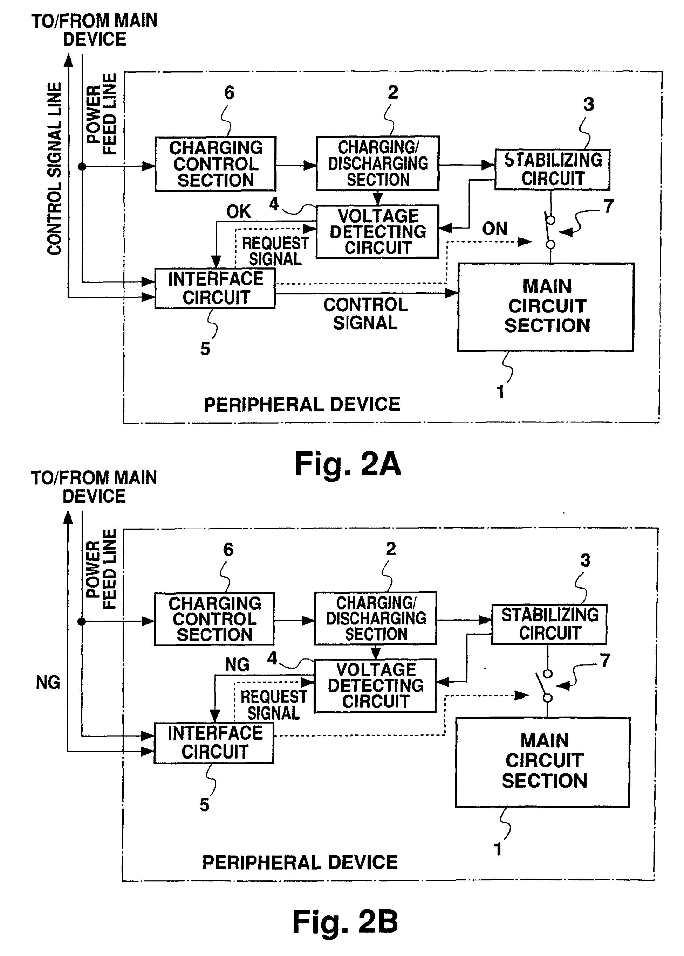

As shown in Fig. 2A, when the control signal is supplied from the main device, the interface circuit 5 requests the voltage detecting circuit 4 to determine whether or not the main circuit section 1 is operative. In response to such a request, the voltage detecting circuit 4 detects the state of charge, e.g., an output voltage value, of the charging/discharging section 2 and, when it determines that the charged state is sufficient for operating the main circuit section 1, sends a signal indicative of the operative state (shown as an OK signal in the figure) to the interface circuit 5. Specifically, whether or not the main circuit section 1 is operative is determined by comparing the output voltage value with a reference value, and, when the measure value exceeds the reference value, it is determined that the device is in an operative state. Then, the interface circuit 5 turns on the power supply switch 7. The charging/discharging section 2 supplies electric power to the stabilizing circuit 3 which, in turn, supplies the received electric power to the main circuit section 1 after stabilization. Also, the interface circuit 5 outputs the control signal received from the main device to the main circuit section 1. As a result, the main circuit section 1 operates normally. It should be noted that when data is communicated to and from the main device during the operation of the main circuit section 1, the interface circuit 5 mediates the data communication.

On the other hand, as shown in Fig. 2B, when the interface circuit 5 receives the control signal from the main device and requests the voltage detecting circuit 4 to determine whether or not the main circuit section 1 is operative, the interface circuit 5 turns off the power supply switch 7 if it is determined that the charged state of the charging/discharging section 2 is insufficient for the operation of the main circuit section 1 (shown as an NG signal in the figure). Also, the interface circuit 5 reports the inoperative state of the main circuit section 1 to the main device in response to the control signal. In this manner, the main device can judge whether or not the main circuit section 1 is operative. Here, it should be noted that the interface circuit 5 does not supply any control signal to the main circuit section 1.

Now, an example wherein the external power source is connected to the peripheral device will be described. Again, the peripheral device of this example receives electric power from the main device or the personal computer via the power feed line of the interface cable. The charging control section 6 uses the electric power supplied through the power feeding line to charge the charging/discharging section 2.

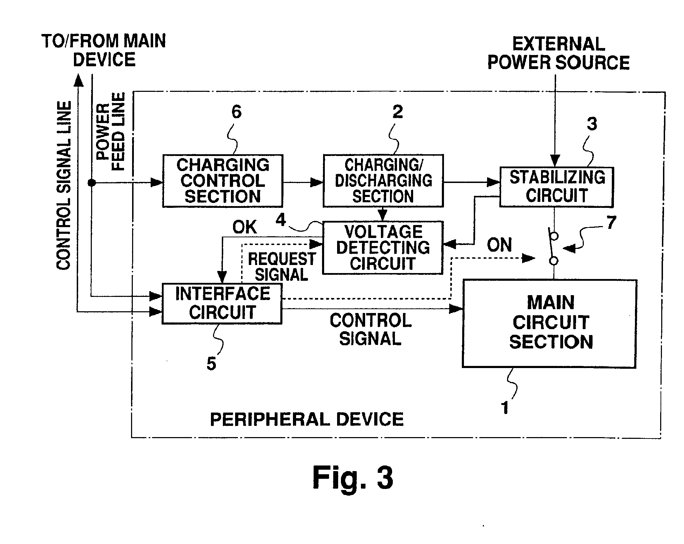

As shown in Fig. 3, when a control signal is received from the main device, the interface circuit 5 requests the voltage detecting circuit 4 to determine whether or not the main circuit section 1 is operative. In response to this request, the voltage detecting circuit 4 detects that the external power source is connected to the stabilizing circuit 3 and sends to the interface circuit 5 a signal indicating that the main circuit section 1 is operative. Then, the interface circuit turns on the power supply switch 7. The stabilizing circuit 3 stabilizes electric power supplied from the external power source and supplies it to the main circuit section 1. The interface circuit 5 also transfers the control signal received from the main device to the main circuit section 1. As a result, the main circuit section 1 operates normally. It should be noted that if data is communicated to and from the main device during the operation of the main circuit section 1, the interface circuit 5 mediates the data communication.

Specifically, in this example, the peripheral device charges the internal charging/discharging section 2 with electric power supplied from the main device via the interface cable and, when a start-up instruction is received from the main device, detects the state of charge of the charging/discharging section 2. In accordance with the start-up instruction, the peripheral device operates the main circuit section 1 if it is operative, or if the main circuit section 1 is inoperative, sends to the main device a signal (i.e., an error signal) indicative of inoperative state of the main circuit section. Alternatively, if the external power source is provided, the main circuit section 1 is operated in response to the start-up instruction from the main device, irrespective of the state of charge of the charging/discharging section 2.

Therefore, it is assured that the interface circuit 5, which operates using electric power supplied from the main device, can transmit the error signal to the main device when the charging/discharging section 2 is insufficiently charged. The main device can recognize the abnormal condition of the peripheral device based on the error signal, enabling proper control of the device.

The voltage detecting circuit 4 may regularly detect the charged state of the charging/discharging section 2 and output a signal to the interface circuit 5 to indicate when the main circuit section 1 switches from the inoperative state to the operative state. In response to such a signal, the interface circuit 5 reports the operative state to the main device. In this manner, the main device can properly control the peripheral device of this embodiment based on the state of the peripheral device.

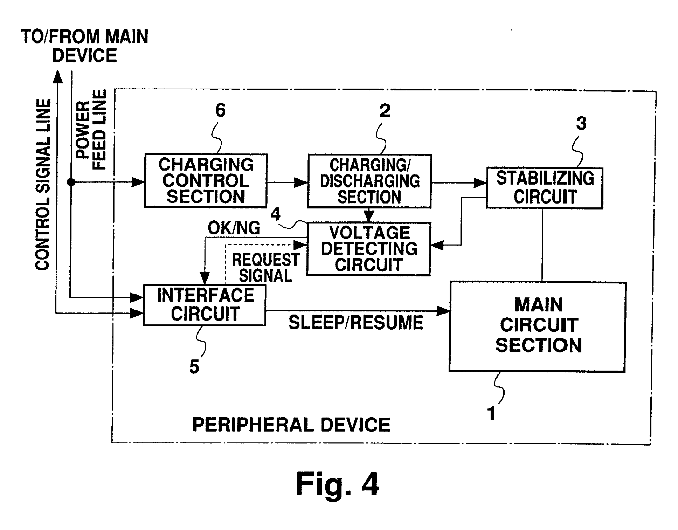

When the main circuit section 1 has a power saving feature, such as, for example, a sleep or suspend mode in a CD-R drive, the power supply switch 7 may not be provided. An example of such a configuration is shown in Fig. 4. In such a case, instead of using the signal for turning on/off the power supply switch 7, the interface circuit 5 outputs an instruction to enter or exist the sleep mode. Effects and advantages will be similar to those of the above-described examples of the embodiment.

Specifically, the voltage detecting circuit 4 detects the charged state of the charging/discharging section 2 and, when it is determined that the main circuit section 1 is inoperative, outputs an NG signal to the interface circuit 5. In response, the interface circuit 5 sends the error signal to the main device via the control signal line, while sending a signal ordering the main circuit section 1 to shift to sleep mode. On the other hand, when the charged state is sufficient for the operation of the main circuit section 1, the voltage detecting circuit 4 outputs an OK signal to the interface circuit 5. The interface circuit 5, in turn, sends a resume signal to the main circuit section 1 so that it can awaken from the sleep mode and resume the operation mode.

Although the embodiment of the present invention has been described above, it should be understood that the present invention is not limited to the examples used to illustrated the embodiment. Instead, it is intended to cover all variations and modifications as will be apparent to those skilled in the art.

For example, although in the above description, the voltage detecting circuit 4 detects the state of charge of the charging/discharging section 2 and determines the operation capability of the main circuit section 1 based on the detected state of charge, the voltage detecting circuit 4 may detect only an output voltage of the charging/discharging section 2 and send the output voltage value to the interface circuit 5 so that the interface circuit 5 can determine whether or not the main circuit section 1 is operative. It is possible to fabricate both the voltage detecting circuit 4 and the interface circuit 5 as a single IC circuit.
Summarized, the present invention provides a peripheral device which reliably reports errors to a main device. When a control signal is received from the main device, an interface circuit requests a voltage detecting circuit to determine whether or not a main circuit section is operative. The voltage detecting circuit determines the capability of operation of the main circuit section based on the state of charge of a charging/discharging section, and outputs the results to the interface circuit. If determined to be operative, the interface circuit turns on a power supply switch to operate the main circuit section, while outputting the control signal received from the main device to the main circuit section. If inoperative, the interface circuit transmits to the main device a signal informing it of the inoperative state.

## Claims

1. A peripheral device for connecting to a main device, comprising:
a charging/discharging means (2) for accumulating electric power received via a power feed line of an interface connected to said main device;
a detecting means (4) for detecting the state of charge of said charging/discharging means; and
an interface controlling means (5) for transmitting a signal indicative of an inoperative state to said main device via said interface when said charged state is below a reference value.

2. A peripheral device for connecting to a main device, comprising:
a main circuit section (1),
a charging/discharging means (2) for accumulating electric power received via a power feed line of an interface connected to said main device, and for supplying accumulated electric power to said main circuit section (1);
a detecting means (4) for detecting the state of charge of said charging/discharging means; and
an interface controlling means (5) for determining whether or not said main circuit section is operative based on said detected state of charge and, if an inoperative state is determined, transmitting to said main device a signal indicative of the inoperative state, via said interface.

3. A peripheral device according to claim 2, further comprising:
a switching means (7) connected between said charging/discharging means (2) and said main circuit section (1) for turning on/off power supply from said charging/discharging means (2) to said main circuit section (1), wherein said interface controlling means (5) turns on said switching means (7) to permit said charging/discharging means (2) to supply electric power to said main circuit section (1) when an operative state is determined, and turns off said switching means (7) to cut off electric power from said charging/discharging means (2) to said main circuit section (1) when an inoperative state is determined.

4. A peripheral device according to claim 2 or 3, wherein said interface controlling means (5) transmits a control signal received from said main device via said interface to said main circuit section (1) when an operative state is determined, and stops sending said control signal to said main circuit section (1) when the inoperative state is determined.

5. A peripheral device according to one of claims 2 to 4, wherein said interface controlling means (5) determines whether the main circuit (1) is in an operative or inoperative state upon receipt of a start-up instruction signal from said main device to said main circuit section
(1).

6. A peripheral device according to one of claims 2 to 6, wherein said interface controlling means (5) operates using electric power received through said power feeding line.

7. A peripheral device according to one of claim 2, wherein said interface controlling means transmits a signal indicating "not ready" as the signal indicating an inoperative state.

8. A peripheral device according to one of claims 2 to 8, wherein said main circuit section (1) outputs a value within a predetermined range at a normal operation, and said interface controlling means (5) transmits a signal indicating an improbable value outside said predetermine range as the signal indicating an inoperative state.

9. A peripheral device according to one of claim 2 to 8, wherein said interface controlling means (5) transmits a predetermined error message as the signal indicating an inoperative state.

10. A peripheral device according to one of claims 2 to 9, wherein said main circuit section (1) is a disk driver for recording or reproducing data on a removable disk, and said interface controlling means (5) transmits a signal indicating that said removable disk is not present as the signal indicating an inoperative state.

11. A peripheral device according to one of claims 2 to 10, further comprising:
a means (3) for receiving electric power from an external power source other than said power feed line to supply electric power to said main circuit section (1), wherein, when said external power source is provided, said interface controlling means (5) determines that the main circuit section is in an operative state, irrespective of the state of charge detected.

12. A peripheral device according to one of claims 2 to 11, wherein said interface controlling means (5) sets said main circuit section (1) to a normal operation mode when an operative state is determined, and sets said main circuit section (1) to a sleep mode which requires less power than said normal operation mode when an inoperative state is determined.
